# EUROPEAN PATENT APPLICATION

(11) **EP 2 684 937 A1**
(43) Date of publication of application: **15.01.2014**
(21) Application number: 12755377.4
(22) Date of filing: 19.01.2012
(51) Int. Cl.: C10G 3/00, C10G 21/14, C10G 45/08, C10G 67/04

(54) **HYDROCARBON FUEL PRODUCTION METHOD**

(30) Priority: 07.03.2011 JP 2011049282
(71) Applicant: JX Nippon Oil & Energy Corporation, Chiyoda-ku Tokyo 100-8162 (JP); National University Corporation Nagoya University, Aichi 464-8601 (JP)
(72) Inventor: HORIZOE, Hirotoshi, Nagoya-shi Aichi 464-8601 (JP); AOKI, Nobuo, Tokyo 100-8162 (JP); UEDA, Iwao, Tokyo 100-8162 (JP)
(74) Representative: Grünecker, Kinkeldey, Stockmair & Schwanhäusser
(86) International application number: PCT/JP2012/051126
(87) International publication number: WO 2012/120926

(57) **Abstract**

The present invention provides a method for producing a hydrocarbon fuel, comprising a first step of holding a mixture containing an aliphatic compound produced by algae, and a hydrocarbon solvent in which critical temperature is 90°C or higher, in a supercritical state, with temperature and pressure adjusted so that a solubility of the aliphatic compound in the hydrocarbon solvent is 15 g or less per 100 g of the hydrocarbon solvent, and then recovering a soluble portion of the aliphatic compound in the hydrocarbon solvent; and a second step of subjecting the soluble portion recovered in the first step to hydrotreatment using a catalyst.

## Description

### Technical Field

The present invention relates to a method for producing a hydrocarbon fuel.

### Background Art

In recent years, with an increase in environmental awareness, attempts have been actively made to positively utilize biomass, carbon neutral resources, as energy sources, instead of fossil fuels, in order to reduce the amount of carbon dioxide discharged. Among them, a method of culturing algae, such as Chlorella, that produce an aliphatic compound, such as an oil or fat or an aliphatic hydrocarbon, and recovering the aliphatic compound from the algae to provide a hydrocarbon fuel is regarded as promising (see Non Patent Literatures 1 and 2).

As the above method of recovering an aliphatic compound from algae, a solvent extraction method is widely used in which using a solvent in which the solubility of aliphatic compounds is high, such as hexane or ethyl acetate, extraction is performed under atmospheric pressure at a temperature equal to or lower than the boiling point of the solvent. On the other hand, an aliphatic compound produced by algae has disadvantages, for example, it is poor in flowability because it is a linear molecule, and when the aliphatic compound is an oil or fat, the content of oxygen is high, and there is a fear of adversely affecting the material of an engine, and the aliphatic compound is of low quality as a fuel as it is. Therefore, in order to obtain a high quality fuel from an aliphatic compound that algae produce, it is necessary to convert the structure of the above aliphatic compound, such as the removal of oxygen, the lowering of molecular weight, or the introduction of a branched chain, by performing hydrotreatment, such as hydrodeoxygenation treatment, hydrocracking treatment, or hydroisomerization treatment, on the above aliphatic compound using a catalyst.

### Citation List

### Non Patent Literature

Non Patent Literature 1: "Bisaisorui No Riyo (Use of Microalgae)" edited by Katsumi Yamaguchi, KOUSEISHA KOUSEIKAKU Co., Ltd., 1992, pp. 64-74
Non Patent Literature 2: Masaki Ota, PETROTECH, 2010, pp. 96-100

### Summary of Invention

### Technical Problem

However, when an aliphatic compound recovered from algae by the above solvent extraction method is subjected to hydrotreatment using a catalyst, a problem is that the catalyst is rapidly deactivated in a treatment step, and long hours of continuous operation cannot be performed. In other words, in the method, hydrotreatment cannot be commercially stably performed, which is a large obstacle in producing a high quality hydrocarbon fuel from an aliphatic compound produced by algae.

The present invention has been made in view of such circumstances, and it is an object of the present invention to provide a method for producing a hydrocarbon fuel in which a high quality hydrocarbon fuel can be commercially stably produced from an aliphatic compound produced by algae.

### Solution to Problem

In order to solve the above problem, the present invention provides a method for producing a hydrocarbon fuel, comprising a first step of holding a mixture containing an aliphatic compound produced by algae, and a hydrocarbon solvent in which critical temperature is 90°C or higher, in a supercritical state, with temperature and pressure adjusted so that a solubility of the aliphatic compound in the hydrocarbon solvent is 15 g or less per 100 g of the hydrocarbon solvent, and then recovering a soluble portion of the aliphatic compound in the hydrocarbon solvent; and a second step of subjecting the soluble portion recovered in the first step to hydrotreatment using a catalyst.

The method for producing a hydrocarbon fuel according to the present invention has the above configuration, and therefore has an effect that the deactivation of the catalyst can be sufficiently suppressed in the hydrotreatment in the second step, and a high quality hydrocarbon fuel can be commercially stably produced.

The present inventors presume a reason why the above effect is achieved by the present invention as follows.

First, in the conventional solvent extraction method using a solvent in which the solubility of aliphatic compounds is high, such as hexane or ethyl acetate, metals, such as magnesium (Mg) and sodium (Na), in a recovered aliphatic compound are mixed as impurities. It is considered that these metals are derived from algae. Then, it is considered that when such an aliphatic compound comprising metals is subjected to a hydrotreatment step, a catalyst is poisoned by the metals, and the catalyst is rapidly deactivated.

On the other hand, in the method for producing a hydrocarbon fuel according to the present invention, by holding a mixture comprising an aliphatic compound produced by algae, and a hydrocarbon solvent in which critical temperature is 90°C or higher, in a supercritical state, with temperature and pressure adjusted so that the solubility of the aliphatic compound in the hydrocarbon solvent is 15 g or less per 100 g of the hydrocarbon solvent, and then recovering the soluble portion of the aliphatic compound in the hydrocarbon solvent, the mixing of metals into the recovered aliphatic compound can be sufficiently suppressed. Then, it is presumed that by subjecting the aliphatic compound recovered in this manner to a hydrotreatment step, the poisoning and deactivation of the catalyst by metals can be sufficiently suppressed.

In the method for producing a hydrocarbon fuel according to the present invention, it is preferred that the above algae comprise at least one selected from the group consisting of the genus Chlorella, the genus Scenedesmus, the genus Arthrospira, the genus Euglena, the genus Botryococcus, and the genus Pseudochoricystis.

### Advantageous Effects of Invention

According to the present invention, a method for producing a hydrocarbon fuel in which a high quality hydrocarbon fuel can be commercially stably produced from an aliphatic compound recovered from algae is provided.

### Brief Description of Drawings

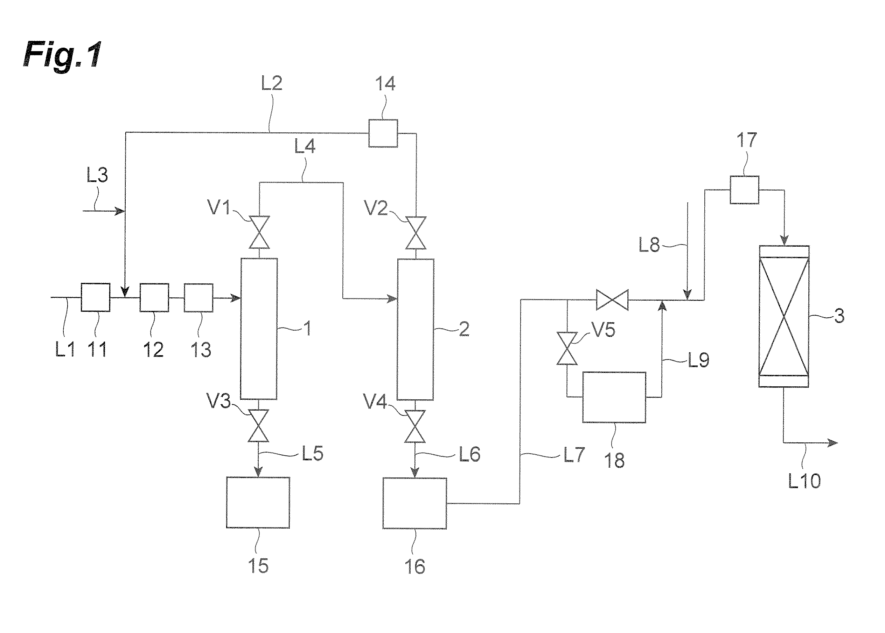

[Figure 1] Figure 1 is an explanatory view showing one example of a production apparatus preferably used in a method for producing a hydrocarbon fuel according to the present invention.

### Description of Embodiments

A preferred embodiment of the present invention (hereinafter sometimes referred to as "this embodiment") will be described in detail below.

A method for producing a hydrocarbon fuel according to this embodiment comprises the first step of holding a mixture containing an aliphatic compound produced by algae and a hydrocarbon solvent in which critical temperature is 90°C or higher with temperature and pressure adjusted at a temperature equal to or higher than the critical temperature of the hydrocarbon solvent so that the solubility of the aliphatic compound in the hydrocarbon solvent is 15 g or less per 100 g of the hydrocarbon solvent, and then recovering the soluble portion of the aliphatic compound in the hydrocarbon solvent; and the second step of subjecting the soluble portion recovered in the first step to hydrotreatment using a catalyst.

At a temperature at which the mixture of an aliphatic compound produced by algae and a hydrocarbon solvent in which critical temperature is 90°C or higher is held, lower than the critical temperature of the hydrocarbon solvent, it is difficult to obtain the effect of the present invention. In addition, if the solubility of the aliphatic compound in the hydrocarbon solvent at the holding temperature of the mixture is more than 15 g per 100 g of the hydrocarbon solvent, it is difficult to obtain the effect of the present invention. The solubility of the aliphatic compound in the hydrocarbon solvent at the above holding temperature is preferably 10 g or less, particularly preferably 6 g or less, per 100 g of the hydrocarbon solvent. In addition, in terms of treatment efficiency (the recovery efficiency of a purified aliphatic compound), the solubility of the aliphatic compound in the hydrocarbon solvent at the above holding temperature is preferably 1 g or more per 100 g of the hydrocarbon solvent.

Oils and fats, aliphatic hydrocarbons, and the like are included in aliphatic compounds produced by algae, which are raw materials of hydrocarbon fuels. In addition, algae that produce aliphatic compounds refer to organisms (algae) living in water that perform oxygenic photosynthesis, the organisms producing aliphatic compounds in their bodies. Algae have the property of immobilizing carbon dioxide by photosynthesis and converting it to aliphatic compounds. Any algae can be used in a method for producing an aliphatic compound in this embodiment as long as they are algae having such a property.

Examples of algae that produce aliphatic compounds in this embodiment include algae belonging to the genus Chlorella, the genus Scenedesmus, the genus Arthrospira, the genus Euglena, the genus Botryococcus, and the genus Pseudochoricystis. More specific examples may include Chlorella, Scenedesmus, Spirulina, Euglena, Botryococcus braunii, and Pseudochoricystis ellipsoidea. However, the algae are not limited to these as long as they produce aliphatic compounds.

For example, Chlorella, Scenedesmus, Spirulina, and Euglena produce oils and fats, and Botryococcus braunii and Pseudochoricystis ellipsoidea produce aliphatic hydrocarbons. These aliphatic compounds are usually accumulated in the cells of the algae (alga bodies), and part of the aliphatic compounds accumulated in the cells may be discharged out of the cells in a culture step.

Examples of oils and fats produced by cultured algae include aliphatic ester compounds composed of aliphatic carboxylic acids and monohydric or trihydric aliphatic alcohols. These oils and fats are not particularly limited as long as they are produced by algae, and examples thereof may include methyl laurate, myristyl myristate, and methyl palmitate.

Examples of aliphatic hydrocarbons produced by cultured algae include aliphatic hydrocarbons being solid or liquid at room temperature, composed of carbon atoms and hydrogen atoms, for example, saturated or unsaturated aliphatic hydrocarbons having 15 to 40 carbon atoms, particularly linear aliphatic hydrocarbons. The aliphatic hydrocarbons are not particularly limited as long as they are produced by algae, and examples thereof may include n-heptadecene and n-eicosadiene.

In a culture step in this embodiment, culture can be performed under known culture conditions for respective algae. Usually, culture is performed at room temperature, preferably at 25 to 37°C, by photoautotrophic culture in which algae are multiplied by photosynthesis using carbon dioxide in air as a carbon source. For a light source for the photosynthesis, sunlight or an artificial light source can be used. In order to hasten the multiplication of the algae, light irradiation for the algae is preferably performed at 2 to 100 kilolux for 30 to 500 hours. Carbon dioxide concentration in a medium atmosphere is preferably 0.3 to 10% by volume, and in order to promote the dissolution of carbon dioxide in a medium, the medium may be stirred, or aerated with air, as required.

For the medium, general inorganic media, such as CHU media, JM media, and MDM media, can be used. Usually, Ca(NO₃)₂·4H₂O and KNO₃ as nitrogen sources, and KH₂PO₄, MgSO₄·7H₂O, and the like as other main nutritional components are contained in inorganic media. In addition, an antibiotic that does not affect the growth of the algae, and the like may be added to the medium. The pH of the medium is preferably 3 to 10. A culture period is preferably 1 to 20 days when culture is started at an alga body concentration of 0.5 g/L though the culture period also depends on the amount of alga bodies inoculated first. If the culture period is less than 1 day, there is a tendency that a sufficient amount of alga bodies are difficult to obtain, and if the culture period is more than 20 days, there is a tendency that nutrients in the medium are depleted and the growth of the algae is difficult.

Alga body concentration in the medium after the completion of the culture is different depending on the type of algae and culture conditions, and is usually 0.01 to 3% by mass. When an aliphatic compound is mixed with a hydrocarbon solvent in which critical temperature is 90°C or higher, a medium containing the aliphatic compound after the completion of culture may be used as it is, or one in which the concentration of alga bodies is performed by subjecting the medium to centrifugation or the like may be used. The concentration of the alga bodies when concentration is performed is usually 1 to 30% by weight. Further, dry alga bodies containing the aliphatic compound, obtained by drying the medium or its concentrated liquid can also be used.

In addition, it is also possible to use an oil containing an aliphatic compound produced by algae, extracted from alga bodies by a solvent extraction method in which using a solvent in which the solubility of aliphatic compounds is high, such as hexane or ethyl acetate, extraction is performed under atmospheric pressure at a temperature equal to or lower than the boiling point of the solvent, as required.

It is also possible to perform the step of increasing the concentration of the aliphatic compound in the alga bodies as an intermediate step as required. Examples of a specific operation of this step may include an operation in which the medium comprising the alga bodies obtained by the culture step, or its concentrated liquid is placed in an anaerobic state.

As the hydrocarbon solvent in which critical temperature is 90°C or higher, aliphatic hydrocarbons having 3 to 6 carbon atoms are preferred, and specific examples thereof may include propane, n-butane, isobutane, n-pentane, and n-hexane. Among these, propane, n-butane, and isobutane are more preferred, and propane is particularly preferred. The critical temperature and critical pressure of hydrocarbon solvents are shown in Table 1.

**[Table 1]**

| Substance name | Chemical formula | Critical temperature TC [K] | Critical temperature TC [°C] | Critical pressure PC [MPa] |
|---|---|---|---|---|
| Ethane | C₂H₄ | 282.9 | 9.7 | 5.117 |
| Propane | C₃H₈ | 370.0 | 96.8 | 4.256 |
| Normal butane | n-C₄H₁₀ | 425.2 | 152.0 | 3.80 |
| Isobutane | i-C₄H₁₀ | 408.1 | 134.9 | 3.65 |
| Normal pentane | n-C₅H₁₂ | 469.6 | 196.4 | 3.37 |
| Normal hexane | n-C₆H₁₄ | 507.4 | 234.2 | 2.97 |
| Normal heptane | n-C₇H₁₆ | 540.2 | 267.0 | 2.74 |

As a method for recovering the soluble portion of the aliphatic compound in the hydrocarbon solvent, for example, gravity sedimentation can be used.

The soluble portion recovered in the first step is subjected to hydrotreatment using a catalyst. The hydrotreatment using a catalyst means performing at least one treatment of hydrodeoxygenation treatment, hydrocracking treatment, and hydroisomerization treatment, using a catalyst.

In hydrodeoxygenation treatment, an oxygen atom contained in a raw material, which is feared to adversely affect the material of an engine, is removed as water and/or an alcohol, and the like, and an unsaturated bond in the raw material is hydrogenated to convert the raw material to a saturated aliphatic hydrocarbon. A hydrocarbon fuel substantially comprising no oxygen atom or unsaturated bond without fear of engine damage or the like can be obtained by this hydrodeoxygenation treatment.

When the aliphatic compound is an oil or fat (an ester composed of a fatty acid and glycerin), it is preferred to perform hydrodeoxygenation treatment first and remove oxygen atoms because the oil or fat comprises many oxygen atoms in its molecule. At the same time, when the oil or fat has an unsaturated bond in its molecule, this unsaturated bond is hydrogenated and a linear saturated hydrocarbon (normal paraffin) is produced during the hydrodeoxygenation treatment.

In this hydrodeoxygenation treatment, when the catalyst used also has hydrocracking activity and/or hydroisomerization activity, there are cases where in a produced normal paraffin, at least part of it undergoes hydrocracking and is converted to a normal paraffin having fewer carbon atoms by the action of the catalyst. In addition, there are cases where at least part of a normal paraffin undergoes hydroisomerization and is converted to a branched saturated hydrocarbon (isoparaffin) by the action of the catalyst.

In hydrocracking treatment, a saturated or unsaturated aliphatic hydrocarbon is converted to an aliphatic hydrocarbon having fewer carbon atoms. In this hydrocracking treatment, it is general that not only a hydrocracking reaction but also a hydroisomerization reaction concurs by the action of the catalyst used. Therefore, it is general that a product in the hydrocracking treatment has a lower molecular weight than an aliphatic hydrocarbon that is a raw material in the treatment, and at the same time, at least part of it becomes an isoparaffin having a branched chain structure.

When the aliphatic compound is a linear aliphatic hydrocarbon, the linear aliphatic hydrocarbon is wax-like at room temperature as it is, and its use as a liquid fuel is difficult in many cases. In addition, even if this linear aliphatic hydrocarbon is liquid at room temperature, it is poor in flowability at low temperature. Therefore, it is preferred to convert the linear aliphatic hydrocarbon to a hydrocarbon having a smaller number of carbon atoms by hydrocracking treatment and convert at least part of it to a branched structure by concurring hydroisomerization to be liquid at room temperature and improve flowability at low temperature. In addition, when the linear aliphatic hydrocarbon as the aliphatic compound has an unsaturated bond, the unsaturated bond is hydrogenated and the linear aliphatic hydrocarbon is converted to a saturated hydrocarbon in the process of hydrocracking treatment.

In addition, when the above aliphatic compound is an oil or fat, and hydrocracking and/or hydroisomerization does not proceed sufficiently in parallel with hydrodeoxygenation in the process of converting the oil or fat to a saturated aliphatic hydrocarbon by hydrodeoxygenation treatment, there are cases where the produced saturated aliphatic hydrocarbon is solid at room temperature, and there are cases where even if the produced saturated aliphatic hydrocarbon is liquid at room temperature, low temperature flowability is not sufficient. In such cases, by subjecting the obtained saturated aliphatic hydrocarbon to hydrocracking treatment, a liquid hydrocarbon fuel that is liquid at room temperature and excellent in low temperature flowability can be obtained. The obtained hydrocracked product is fractionated into fractions in boiling point ranges by means such as distillation as required. The fractionated aliphatic hydrocarbons are used in applications suitable for respective fractionated aliphatic hydrocarbons as base materials for gasoline engines, heating (kerosene), jet engines, diesel engines, and the like.

In hydroisomerization treatment, part or all of a linear aliphatic hydrocarbon is converted to a branched aliphatic hydrocarbon (isoparaffin). A liquid fuel base material having high flowability even at the time of low temperature can be obtained by this treatment.

When the aliphatic compound is a linear aliphatic hydrocarbon and the low temperature flowability of a product obtained by subjecting the hydrocarbon to the above hydrocracking treatment is not sufficient, when the number of carbon atoms of a linear aliphatic hydrocarbon that is the aliphatic compound is relatively small, when the aliphatic hydrocarbon is an oil or fat and the low temperature flowability of a saturated aliphatic hydrocarbon obtained by hydrodeoxygenation treatment is not sufficient, or the like, hydroisomerization treatment can be performed.

A fuel base material obtained in this manner is preferably used for jet engines and diesel engines.

The hydrodeoxygenation treatment, the hydrocracking treatment, and the hydroisomerization treatment will each be described below in detail.

As the catalyst used in the hydrodeoxygenation treatment, for example, catalysts used in the hydrodeoxygenation treatment of oils and fats derived from animals and plants disclosed in Japanese Unexamined Patent Application Publication No. 2010-121071, Japanese Unexamined Patent Application Publication No. 2007-308564, Japanese Unexamined Patent Application Publication No. 2007-308565, and the like can be used. In other words, a catalyst in which at least one metal having hydrogenation activity (active metal) selected from elements in Groups 6 and 8 to 10 of the periodic table is supported on a support composed of a porous inorganic oxide comprising at least one element selected from aluminum, silicon, zirconium, boron, titanium, and magnesium can be used. Here, the "periodic table" means the long-form periodic table of elements defined by IUPAC (International Union of Pure and Applied Chemistry).

Examples of the above support include alumina, silica, zirconia, boria, titania, or magnesia, or a complex oxide formed by combining these, silica-alumina, silica-zirconia, alumina-boria, silica-titania, or silica-magnesia. Among these, silica-alumina, silica-zirconia, alumina-boria, silica-titania, and silica-magnesia, which are complex oxides, and the like are preferred. In addition, the above support may comprise a zeolite.

The above support may contain a binder, such as alumina, silica, titania, or magnesia, for the purpose of improving moldability and mechanical strength.

As the above active metal, preferred examples of metals in Group 6 include molybdenum (Mo) and tungsten (W), preferred examples of metals in Group 8 include ruthenium (Ru) and osmium (Os), preferred examples of metals in Group 9 include cobalt (Co), rhodium (Rh), and iridium (Ir), and preferred examples of metals in Group 10 include nickel (Ni), palladium (Pd), and platinum (Pt). One of these metals may be used alone, or two or more of these metals may be used in combination. Preferred examples in which two or more are used in combination include combinations such as Ni-Mo, Co-Mo, Ni-Co-Mo, and Ni-W. In the above combinations of metals, it is preferred to pretreat (presulfurize) the catalyst with a fluid comprising a sulfur compound, such as dimethyl disulfide, before subjecting the catalyst to hydrodeoxygenation treatment because the metals exhibit hydrogenation activity by being sulfurized, and it is preferred to add a small amount of the sulfur compound to a raw material oil also during the treatment.

On the other hand, when one is used alone as the active metal, precious metals, such as Pt, Pd, and Rh, are preferred. When a precious metal is used as the active metal, it is general to perform no presulfurization and perform reduction treatment with a hydrogen gas or the like and subject the catalyst to hydrodeoxygenation treatment because precious metals are poisoned by sulfur compounds. Also when precious metals are used as the active metals, two or more, for example, Pt-Pd, may be used in combination.

It is preferred that the amount of the above active metal supported based on the total mass of the support is 0.1 to 3% by mass as metal atoms when the active metal is a precious metal, and the amount of the above active metal supported is 2 to 50% by mass as a metal oxide when the active metal is a metal other than precious metals.

A method for supporting the active metal on the support is not particularly limited, and known methods applied when usual hydrodesulfurization catalysts and the like are produced can be used. Usually, a method of impregnating a catalyst support with a solution comprising a salt of an active metal is preferably used. In addition, an equilibrium adsorption method, a Pore-filling method, an Incipient-wetness method, and the like are also preferably used. For example, the Pore-filling method is a method of previously measuring the pore volume of a support and impregnating with a metal salt solution of the same volume as the pore volume, and an impregnation method is not particularly limited, and impregnation can be performed by an appropriate method according to the amount of a metal supported and the physical properties of a catalyst support.

The reactor form of the hydrodeoxygenation treatment may be a fixed bed type. In other words, hydrogen can take either form of a countercurrent or a cocurrent with respect to a raw material oil, and a form having a plurality of reaction columns and combining a countercurrent and a cocurrent may be used. A general form is a downflow, and a gas-liquid cocurrent form can be used. In addition, a reactor may be used alone, or a plurality of reactors may be combined, and a structure in which the interior of one reactor is divided into a plurality of catalyst beds may be used.

As treatment conditions in the hydrodeoxygenation treatment, it is preferred that hydrogen pressure is 2 to 13 MPa, liquid space velocity is 0.1 to 3.0 h⁻¹, and hydrogen/oil ratio is 150 to 1500 NL/L, it is more preferred that hydrogen pressure is 2 to 13 MPa, liquid space velocity is 0.1 to 3.0 h⁻¹, and hydrogen/oil ratio is 150 to 1500 NL/L, and conditions in which hydrogen pressure is 3 to 10.5 MPa, liquid space velocity is 0.25 to 1.0 h⁻¹, and hydrogen/oil ratio is 300 to 1000 NL/L are particularly preferred.

In addition, treatment temperature is generally preferably in the range of 150 to 480°C, desirably 200 to 400°C, and further desirably in the range of 260 to 360°C, as the average temperature of the entire reactor. If reaction temperature is lower than 150°C, a reaction may not proceed sufficiently, and if the reaction temperature is higher than 480°C, there is a tendency that decomposition proceeds excessively, causing a decrease in product yield.

The hydrodeoxygenation treatment involves the generation of large heat of reaction, and therefore, it is preferably performed to take means for preventing an excessive increase in temperature in the reactor. For example, a method is used such as dividing a hydrogen gas into a plurality of flows and feeding the hydrogen gas to the middle of the reactor, rather than feeding all of the hydrogen gas to a reactor inlet, to cool the interior of the reactor by the cold heat of the hydrogen gas, or recycling part of a produced oil flowed out of the reactor to the reactor to dilute a raw material oil.

As the catalyst used in the hydrocracking treatment, known catalysts used in the hydrocracking treatment of hydrocarbons comprising wax components can be used. In other words, examples thereof include those in which metals belonging to Groups 8 to 10 of the periodic table as active metals are supported on supports comprising solid acids.

Examples of preferred supports include those comprising one or more types of solid acids selected from among crystalline zeolites, such as ultrastable Y-type (USY) zeolites, Y-type zeolites, mordenites, and beta zeolites, and amorphous complex metal oxides having fire resistance, such as silica-alumina, silica-zirconia, and alumina-boria. Further, the support is more preferably one comprising a USY zeolite and one or more solid acids selected from among silica-alumina, alumina-boria, and silica-zirconia, further preferably one comprising a USY zeolite and alumina-boria and/or silica-alumina.

USY zeolites are those in which Y-type zeolites are ultrastabilized by hydrothermal treatment and/or acid treatment, and in addition to a fine pore structure referred to as micropores in which pore diameter that the Y-type zeolites intrinsically have is 2 nm or less, new pores having a pore diameter in the range of 2 to 10 nm are formed. There is no particular limit to the average particle diameter of the USY zeolite, and the average particle diameter of the USY zeolite is preferably 1.0 µm or less, more preferably 0.5 µm or less. In addition, in the USY zeolites, silica/alumina molar ratio (the molar ratio of silica to alumina) is preferably 10 to 200, more preferably 15 to 100, and further preferably 20 to 60.

In addition, it is preferred that the support comprises 0.1 to 80% by mass of a crystalline zeolite and 0.1 to 60% by mass of an amorphous complex metal oxide having fire resistance.

The support can be produced by molding a support composition comprising the above solid acid, and a binder as required, and then firing the molded support composition. The blending proportion of the solid acid is preferably 1 to 70% by mass, more preferably 2 to 60% by mass, based on the total amount of the support. In addition, when the support comprises a USY zeolite, the blending proportion of the USY zeolite is preferably 0.1 to 10% by mass, more preferably 0.5 to 5% by mass, based on the mass of the entire support. Further, when the support comprises a USY zeolite and alumina-boria, the blending ratio of the USY zeolite to the alumina-boria (USY zeolite/alumina-boria) is preferably 0.03 to 1 in terms of mass ratio. In addition, when the support comprises a USY zeolite and silica-alumina, the blending ratio of the USY zeolite to the silica-alumina (USY zeolite/ silica-alumina) is preferably 0.03 to 1 in terms of mass ratio.

As the binder, there is no particular limit, and alumina, silica, titania, and magnesia are preferred, and alumina is more preferred. The amount of the binder blended is preferably 20 to 98% by mass, more preferably 30 to 96% by mass, based on the mass of the entire support.

The shape of a molded support is not limited, and examples thereof include a spherical shape, a cylindrical shape, and an irregular cylindrical shape having a trefoil or quatrefoil cross section. In addition, there is also no particular limit to its particle diameter, and the particle diameter is preferably 1 µm to 10 mm in terms of practicality.

The firing temperature of the above support composition is preferably in the range of 400 to 550°C, more preferably in the range of 470 to 530°C, and further preferably in the range of 490 to 530°C.

Specific examples of the metals in Groups 8 to 10 of the periodic table include cobalt, nickel, rhodium, palladium, iridium, and platinum. Among these, it is preferred to use one of metals selected from nickel, palladium, and platinum alone or two or more of the metals in combination. These metals can be supported on the above-described support by conventional methods, such as impregnation and ion exchange. There is no particular limit to the amount of the metals supported, and the total amount of the metals is preferably 0.1 to 3.0% by mass based on the mass of the support.

The form of a reactor and treatment conditions for performing the hydrocracking treatment are similar to those of the above-described hydrodeoxygenation treatment, and therefore, description is omitted in terms of avoiding repetition. An excessive increase in temperature in the reactor due to the heat of reaction mentioned in the hydrodeoxygenation treatment does not apply to the hydrocracking treatment and the hydroisomerization treatment described later.

As the catalyst used in the hydroisomerization treatment, catalysts generally used in hydroisomerization in petroleum refining and the like, that is, catalysts in which active metals having hydrogenation ability are supported on inorganic supports, can be used.

Examples of the inorganic support constituting the above catalyst include metal oxides, such as alumina, silica, titania, zirconia, and boria. One of these metal oxides, a mixture of two or more of these metal oxides, or a complex metal oxide, such as silica-alumina, silica-zirconia, alumina-zirconia, or alumina-boria, may be used. The above inorganic support is preferably a complex metal oxide having solid acidity, such as silica-alumina, silica-zirconia, alumina-zirconia, or alumina-boria, in terms of allowing hydroisomerization to proceed efficiently. In addition, a small amount of a zeolite may be contained in the inorganic support.

Further, a binder may be blended in the above inorganic support for the purpose of an improvement in the moldability and mechanical strength of the support. Examples of preferred binders include alumina, silica, and magnesia.

As the active metal constituting the above catalyst, one or more metals selected from the group consisting of metals in Groups 8 to 10 are used. Specific examples of these metals include a precious metal, such as platinum, palladium, rhodium, ruthenium, iridium, or osmium, or cobalt or nickel, preferably platinum, palladium, nickel, or cobalt, and further preferably platinum or palladium. In addition, it is also preferred to use a plurality of these metals in combination, and examples of preferred combinations in this case include platinum-palladium.

The content of the active metal in the above catalyst is preferably about 0.1 to 3% by mass as metal atoms based on the mass of the support when the active metal is the above precious metal. In addition, the content of the active metal in the above catalyst is preferably about 2 to 50% by mass as a metal oxide based on the mass of the support when the active metal is a metal other than the above precious metals.

The form of a reactor and treatment conditions for performing the hydroisomerization treatment are similar to those of the above-described hydrocracking treatment, and therefore, description is omitted in terms of avoiding repetition.

For the hydrodeoxygenation treatment, hydrocracking treatment, and hydroisomerization treatment described above, it is possible to provide different steps, respectively, and perform these, or it is possible to simultaneously perform a plurality of treatments by using a catalyst having a plurality of functions in one step. Particularly, when the hydrocracking treatment is performed, it is usual that not only the decomposition of molecules constituting a raw material oil, but also the provision of a branched chain by hydroisomerization proceeds simultaneously. In addition, it is possible to provide a plurality of different catalyst beds in one reactor and perform different treatments in the respective catalyst beds.

A high quality hydrocarbon fuel can be commercially stably produced from an aliphatic compound produced by algae, by using as essential steps the first step of obtaining a mixture comprising an aliphatic compound, such as an oil or fat or an aliphatic hydrocarbon, produced by algae and a hydrocarbon solvent in which critical temperature is 90°C or higher, adjusting, for the mixture, temperature and pressure at a temperature equal to or higher than the critical temperature of the hydrocarbon solvent so that the solubility of the aliphatic compound in the hydrocarbon solvent is 15 g or less per 100 g of the hydrocarbon solvent, and recovering the soluble portion of the aliphatic compound in the hydrocarbon; and the second step of subjecting the soluble portion obtained in the first step to hydrotreatment using a catalyst, as described above.

Next, one example of a production apparatus preferably used in this embodiment will be described with reference to Figure 1.

In a production apparatus shown in Figure 1, an aliphatic compound extraction and separation vessel 1, a solvent separation vessel 2, and a hydrotreatment reactor 3 are disposed in this order from an upstream side. The aliphatic compound extraction and separation vessel 1 and the solvent separation vessel 2 are coupled to each other via a line L4, and the solvent separation vessel 2 and the hydrotreatment reactor 3 are coupled to each other via lines L6 and L7.

A line L1 is coupled to the upstream side of the aliphatic compound extraction and separation vessel 1, and a pump 11, a mixing apparatus 12, and a temperature adjustment apparatus 13 are provided in the line L1 in this order from the upstream side. A plunger pump can be illustrated as the pump 11, a line mixer can be illustrated as the mixing apparatus 12, and a heater using steam can be illustrated as the temperature adjustment apparatus 13.

In addition, the top of the solvent separation vessel 2 and a predetermined position between the pump 11 and the mixer 12 in the line L1 are coupled to each other via a line L2. A pressure adjustment valve V2 and a pressure/flow rate adjustment apparatus 14 are provided in the line L2. Thus, a hydrocarbon solvent in which critical temperature is 90°C or higher (or a mixed fluid comprising the hydrocarbon solvent) separated in the solvent separation vessel 2 can be adjusted to a predetermined pressure and flow rate and transferred to the line L1. A booster can be illustrated as the pressure/flow rate adjustment apparatus 14. Further, a line L3 for introducing a hydrocarbon solvent in which critical temperature is 90°C or higher, as a makeup gas, is coupled to the line L2.

In the production apparatus shown in Figure 1, a raw material comprising an aliphatic compound produced by algae, together with a hydrocarbon solvent in which critical temperature is 90°C or higher (or a mixed fluid comprising the hydrocarbon solvent) from the line L2, is continuously fed from the line L1 to the aliphatic compound extraction and separation vessel 1, and this mixture is allowed to remain in the aliphatic compound extraction and separation vessel 1 for a fixed time. At this time, temperature and pressure are adjusted at a temperature equal to or higher than the critical temperature of the hydrocarbon solvent so that the solubility of the aliphatic compound in 100 g of the hydrocarbon solvent is 15 g or less, and the mixture is held in the aliphatic compound extraction and separation vessel 1. Examples of a method for adjusting temperature and pressure include a method of adjusting the temperature and pressure of the hydrocarbon solvent (or the mixed fluid comprising the hydrocarbon solvent) transferred from the solvent separation vessel 2 by the pressure/flow rate adjustment apparatus 14, a method of adjusting the temperature and pressure of the hydrocarbon solvent introduced as a makeup gas from the line L2, a method of adjusting pressure by a pressure adjustment valve V1, and a method of adjusting the temperature of the mixture by the temperature adjustment apparatus 13. One of the above methods may be used alone, or two or more of the above methods may be used in combination.

Next, in the aliphatic compound extraction and separation vessel 1, a mixture of the soluble portion of the aliphatic compound in the hydrocarbon solvent and the hydrocarbon solvent, and the insoluble portion (residue) of the aliphatic compound in the hydrocarbon solvent are separated by gravity sedimentation. The above mixture of the soluble portion and the hydrocarbon solvent is transferred to the solvent separation vessel 2 through the line L4 coupled to the top of the aliphatic compound extraction and separation vessel 1.

A line L5 having a valve V3 is coupled to the bottom of the aliphatic compound extraction and separation vessel 1, and the other end of the line L5 is led to a recovery container 15. The above insoluble portion separated in the aliphatic compound extraction and separation vessel 1 is transferred to the recovery container 15 through the line L5. When the above insoluble portion is recovered, a small amount of the hydrocarbon solvent can be recovered together, and the hydrocarbon solvent may be recovered from the recovery container 15 and reused.

The mixture of the soluble portion of the aliphatic compound in the hydrocarbon solvent and the hydrocarbon solvent is further separated into the aliphatic compound (purified aliphatic compound) and the hydrocarbon solvent by gravity sedimentation in the solvent separation vessel 2. This separation operation is an operation in which temperature and/or pressure are adjusted at a temperature equal to or higher than the critical temperature of the hydrocarbon solvent so that the solubility of the aliphatic compound in the hydrocarbon solvent is substantially zero. This separation operation is a gravity sedimentation operation involving no phase change, and therefore, the latent heat of vaporization is unnecessary, and sensible heat recovery is possible, and therefore, this separation operation is useful in terms of energy saving. Examples of a method for decreasing solubility include a method of setting pressure in the solvent separation vessel 2 lower than the pressure of the aliphatic compound extraction and separation vessel 1 by the adjustment of the valve V2, and a method of providing a heating apparatus in the line L4 and setting temperature in the solvent separation vessel 2 higher than temperature in the aliphatic compound extraction and separation vessel 1. It is possible to set the pressure of the solvent separation vessel 2 somewhat lower and set temperature in the solvent separation vessel 2 somewhat higher. Examples of the heating apparatus provided in the line L4 may include a heat exchanger. In this case, it is possible to lead the line L2 to the heat exchanger and use the hydrocarbon solvent from the solvent separation vessel 2 as a heat source.

The line L6 having a valve V4 is coupled to the bottom of the solvent separation vessel 2, and the other end of the line L6 is led to a recovery container 16. The purified aliphatic compound separated in the solvent separation vessel 2 is transferred to the recovery container 16 through the line L6 coupled to the bottom of the solvent separation vessel 2. The purified aliphatic compound can be recovered together with a small amount of the hydrocarbon solvent, and the hydrocarbon solvent may be recovered from the recovery container 16 and reused. On the other hand, the separated hydrocarbon solvent is transferred to the line L1 through the line L2 coupled to the top of the solvent separation vessel 2.

The purified aliphatic compound is transferred from the recovery container 16 to the hydrotreatment reactor 3 through the line L7. A valve V5, a hydrogen introduction line L8, and a heating apparatus 17 are provided in the line L7 from the upstream side, and the other end of the line L7 is led to the top of the hydrotreatment reactor 3. Thus, it is possible to mix the purified aliphatic compound with hydrogen from the line L8, heat the mixture to a predetermined temperature by the heating apparatus 17, and then feed the mixture to the hydrotreatment reactor 3 to perform hydrotreatment with a catalyst.

In addition, a branch line L9 is provided in the line L7. One end of the branch line L9 is coupled to the upstream side of the valve V5 in the line L7, and the other end is coupled between the valve V5 in the line L7 and the coupling portion of the hydrogen introduction line L8. Further, a valve V6 and an intermediate tank 18 are provided in the branch line L9 in this order from the upstream side. When the apparatus is operated with the valve V5 opened and the valve V6 closed, the purified aliphatic compound is continuously fed to the hydrotreatment reactor 3 through the line L6. On the other hand, when the apparatus is operated with the valve V5 closed and the valve V6 opened, the purified aliphatic compound, which is a raw material in hydrotreatment, can accumulate temporarily in the intermediate tank 20, and the feed of the purified aliphatic compound to a hydrotreatment step can be stabilized.

A line L10 is coupled to the bottom of the hydrotreatment reactor 3, and a hydrocarbon fuel produced by hydrotreatment is recovered from the line L 10.

The present invention is not limited to the above embodiment. For example, in the above embodiment, an example in which the first step and the second step are continuously performed using the production apparatus shown in Figure 1 has been described, but these steps need not be continuously performed.

In addition, the lines L6 and L7 may be directly connected to each other without providing the recovery container 16.

In addition, the hydrotreatment reactor 3 may be at a location different from that of the aliphatic compound extraction and separation vessel 1 and the solvent separation vessel 2, and a transport step may be provided between the first step and the second step. In this case, the intermediate tank 18 can be used as a raw material (reception) tank.

### Examples

The present invention will be more specifically described below based on Examples, but the present invention is not limited to the following Examples in any way.

### (Culture)

The culture of Euglena was carried out according to a method described in an appendix to the book "Yugurena Seiri To Seikagaku (Euglena Physiology and Biochemistry)," Gakkai Shuppan Senta (Academic Society Publication Center) (1989). Using an E. Gracilis Z strain and using a pool having an area of 1.2 m², culture was performed outdoors by sunlight in a Cramer-Myers medium for 7 days. Then, according to description on page 114 of the book, anaerobic treatment was performed for a whole day, and further, this was dried at 150°C to obtain a dry powder of Euglena. The same operation was repeated to recover 1700 g of a Euglena dry powder subjected to anaerobic treatment.

### (Solvent Extraction)

Extraction was performed using, as a solvent, hexane, which was most widely used for the extraction of aliphatic compounds from algae. A flask having a volume of 20 L was charged with 1650 g of the above dry powder and 10 L of hexane, and an obtained suspension was heated and stirred under atmospheric pressure at 55°C for 1 hour and then filtered to recover a hexane solution.

Hexane was distilled off from this hexane solution using an evaporator (water bath temperature 50°C) to obtain an extract from alga bodies in the proportion of 27.5% by mass based on dry alga bodies. This extract was analyzed by a GC-MS method and an NMR method, and it was confirmed that this extract was a wax ester comprising myristyl myristate as a main component. In addition, the content of oxygen atoms contained in this extract was 8.1 % by mass.

As a result of separately measuring the solubility of this extract in hexane at 55°C, it was 42 g per 100 g of hexane. In other words, the above solvent extraction was carried out with this solubility. This extract is hereinafter referred to as a hexane-extracted oil.

### (Measurement of Solubility in Propane and Propane Extraction)

The measurement of the solubility of the above hexane-extracted oil in propane and the extraction of the above hexane-extracted oil with propane were carried out under each condition using a pressure container having an internal volume of 1 L.

In the above measurement and extraction, the container controlled to a predetermined temperature was charged with the hexane-extracted oil, propane was fed thereto, and pressure was held in the state of 6 MPa for 1 h to dissolve the hexane-extracted oil in the propane (propane extraction). Then, the total amount of the propane in a state in which part of the hexane-extracted oil was dissolved was drawn from the container. At each temperature, the hexane-extracted oil remained in the pressure container after the propane was drawn, and therefore, it was determined that the one drawn from the pressure container was the propane in which the hexane-extracted oil at saturation concentration was dissolved, at each temperature.

The propane was volatilized from this propane in which the hexane-extracted oil at saturation concentration was dissolved, the dissolved hexane-extracted oil was recovered and weighed, and the solubility of the hexane-extracted oil at the temperature was calculated as mass based on 100 g of propane.

In addition, at each temperature, propane was newly added to the hexane-extracted oil that was insoluble in the propane in the above propane extraction and remained in the pressure container after propane discharge, and the propane extraction of the hexane-extracted oil and the recovery of a propane-soluble portion were performed as in the above. Then, this operation was repeatedly carried out until the proportion of the mass of the total of the hexane-extracted oil recovered by propane extraction to the mass of the hexane-extracted oil charged into the pressure container (recovery rate) reached 90% or more.

The measurement result of the solubility of the hexane-extracted oil in propane at each temperature is shown in Table 2. From the results shown in Table 2, it is seen that the solubility changes largely between temperatures of 110°C and 120°C.

**[Table 2]**

| Temperature (°C) | Solubility (g/100g) |
|---|---|
| 40 | 43.0 |
| 70 | 42.0 |
| 90 | 41.2 |
| 100 | 33.1 |
| 110 | 26.2 |
| 111 | 13.7 |
| 112 | 8.0 |
| 114 | 5.5 |
| 116 | 4.0 |
| 118 | 2.5 |
| 120 | 2.0 |
| 122 | 0.8 |

### (Preparation of Hydrodeoxygenation Catalyst)

18.0 g of water glass No. 3 was added to 3000 g of a sodium aluminate aqueous solution having a concentration of 5% by mass, and the aqueous solution was placed in a container kept at 65°C. On the other hand, a solution in which 6.0 g of phosphoric acid (concentration 85%) was added to 3000 g of an aluminum sulfate aqueous solution having a concentration of 2.5% by mass was prepared in another container kept at 65°C, and the above-described aqueous solution comprising sodium aluminate was dropped into this. The dropping was completed with a point of time when the pH of the mixed solution reached 7.0 taken as an end point, and an obtained slurry-like product was filtered through a filter to obtain a cake-like slurry.

This cake-like slurry was transferred to a container to which a reflux condenser was attached, 150 ml of distilled water and 10 g of a 27% ammonia aqueous solution were added, and the slurry was heated and stirred at 75°C for 20 hours. The slurry was placed in a kneading apparatus, and kneaded while being heated to 80°C or higher to remove moisture, to obtain a clay-like kneaded material. The obtained kneaded material was extruded into a cylindrical shape having a diameter of about 1.5 mm by an extrusion molding machine, cut to a length of about 3 mm, dried at 110°C for 1 hour, and then fired at 550°C to obtain a molded support.

50 g of the obtained molded support was placed in an eggplant type flask, and an impregnation aqueous solution comprising 17.3 g of molybdenum trioxide, 13.2 g of nickel(II) nitrate hexahydrate, 3.9 g of phosphoric acid (concentration 85%), and 4.0 g of malic acid was injected into the flask while degassing was performed by a rotary evaporator, to perform impregnation. The impregnated sample was dried at 120°C for 1 hour and then fired at 550°C to obtain a catalyst. The physical properties of the catalyst are shown in Table 3.

**[Table 3]**

| | | | |
|---|---|---|---|
| Catalyst composition (% by mass) | Support mass basis | Al₂O₃ | 91.2 |
| | | SiO₂ | 4.8 |
| | | P₂O₅ | 4.0 |
| | Support mass basis | MoO₃ | 24.0 |
| | | NiO | 2.6 |
| Pore volume (ml/g) | | | 0.75 |
| Average pore diameter (nm) | | | 7.0 |

### [Comparative Example 1]

A reaction tube filled with the above catalyst (10 ml) was attached to a fixed-bed flow type reaction apparatus in a countercurrent manner. Then, the presulfurization of the catalyst was performed for 4 hours under the conditions of a catalyst layer average temperature of 300°C, a hydrogen partial pressure of 6 MPa, a liquid space velocity of 1 h⁻¹, and a hydrogen/oil ratio of 200 NL/L ("NL" is the volume of a hydrogen gas at 0°C and atmospheric pressure), using a straight-run light oil to which dimethyl disulfide was added (sulfur 3% by mass).

After the presulfurization, hydrodeoxygenation treatment was performed using the above-described hexane-extracted oil (propane extraction was not performed) as a raw material oil. At this time, dimethyl sulfide was added to the raw material oil so that sulfur content (in terms of sulfur atoms) with respect to the raw material oil was 10 ppm by mass. For the conditions of the treatment, hydrogen pressure was set to 6.0 MPa, liquid space velocity was set to 1.0 h⁻¹, and hydrogen/oil ratio was set to 510 NL/L. In addition, treatment temperature was adjusted so that the content of oxygen atoms in a produced oil was 0.5% by mass or less, which was necessary to ensure fuel oil quality, and the treatment temperature was set to 280°C at the time of the start of the treatment based on the results of preliminary study. Then, the deterioration of the catalyst (activity decrease) was significant, and therefore, the treatment temperature had to be largely increased over time in order to maintain the above content of oxygen atoms in a produced oil. When the deterioration rate of the catalyst was expressed using an increase in reaction temperature per day necessary to maintain the content of oxygen atoms in the produced oil at 0.5% by mass or less, as an indicator (referred to as a "catalyst deterioration rate indicator"), it was 11.2°C/day.

### (Comparative Example 2)

Hydrodeoxygenation treatment was performed by an operation similar to that of Comparative Example 1 except that instead of the hexane-extracted oil in Comparative Example 1, a propane-soluble portion was used that was obtained by repeating propane extraction under the condition (temperature 110°C) in which the solubility of the hexane-extracted oil in propane under a pressure of 6 MPa was 26.2 g per 100 g of propane, shown in the above-described Table 1, until the recovery rate reached 90% or more. The deterioration of the catalyst was significant as in Comparative Example 1, and the catalyst deterioration rate indicator was 10.4°C/day.

### (Example 1)

Hydrodeoxygenation treatment was performed by an operation similar to that of Comparative Example 1 except that instead of the hexane-extracted oil in Comparative Example 1, a propane-soluble portion was used that was obtained by repeating propane extraction under the condition (temperature 111 °C) in which the solubility of the hexane-extracted oil in propane under a pressure of 6 MPa was 13.7 g per 100 g of propane, shown in the above-described Table 1, until the recovery rate reached 90% or more. Catalyst deterioration was reduced compared with Comparative Example 1 and Comparative Example 2, and the catalyst deterioration rate indicator was 0.7°C/day.

### (Example 2)

An operation similar to that of Comparative Example 1 was performed except that instead of the hexane-extracted oil in Comparative Example 1, a propane-soluble portion was used that was obtained by repeating propane extraction under the condition (temperature 112°C) in which the solubility of the hexane-extracted oil in propane under a pressure of 6 MPa was 8.0 g per 100 g of propane, shown in the above-described Table 1, until the recovery rate reached 90% or more. Catalyst deterioration was further reduced, and the catalyst deterioration rate indicator was 0.5°C/day.

### (Example 3)

Hydrodeoxygenation treatment was performed by an operation similar to that of Comparative Example 1 except that instead of the hexane-extracted oil in Comparative Example 1, a propane-soluble portion was used that was obtained by repeating propane extraction under the condition (temperature 114°C) in which the solubility of the hexane-extracted oil in propane under a pressure of 6 MPa was 5.5 g per 100 g of propane, shown in the above-described Table 1, until the recovery rate reached 90% or more. Catalyst deterioration was further reduced, and the catalyst deterioration rate indicator was 0.3°C/day.

The results of the Comparative Examples and the Examples described above are collectively shown in Table 4. In addition, impurity concentration in the hexane-extracted oil and the propane-soluble portions obtained by performing propane extraction under the respective conditions, subjected to hydrodeoxygenation treatment, is shown together in Table 4. From the results shown in Table 4, it is seen that according to the method of the present invention, the catalyst deterioration rate indicator is significantly improved, and a high quality fuel can be commercially stably produced from an aliphatic compound produced by algae.

**[Table 4]**

| | Solubility (g/100g) | Impurity concentration (ppm by mass) | | | | | | | | Catalyst deterioration rate indicator (°C/day) |
|---|---|---|---|---|---|---|---|---|---|---|
| | | Mg | Na | K | Ca | Al | Zn | Fe | P | |
| Comparative Example 1 | --- | 270 | 920 | 250 | 170 | 3 | 45 | 110 | 3800 | 11.2 |
| Comparative Example 2 | 26.2 | 12 | 26 | 11 | 7 | <1 | 2 | 7 | 120 | 10.4 |
| Example 1 | 13.7 | 3 | 4 | 3 | 2 | <1 | 1 | 2 | 9 | 0.7 |
| Example 2 | 8.0 | 1 | 3 | 3 | 1 | <1 | <1 | 1 | 5 | 0.5 |
| Example 3 | 5.5 | <1 | 2 | <3 | <1 | <1 | <1 | 1 | <3 | 0.3 |

### Industrial Applicability

According to the present invention, a high quality hydrocarbon fuel can be commercially stably produced from an aliphatic compound produced by algae. Therefore, the present invention is very useful in producing hydrocarbon fuels from biomass raw materials.

### Reference Signs List

1 ... aliphatic compound extraction and separation vessel, 2 ... solvent separation vessel, 3 ... hydrotreatment reactor, 11 ... pump, 12 ... mixing apparatus, 13, 17 ... heating apparatus, 14 ... pressure/flow rate adjustment apparatus, 15, 16 ... recovery container, 18 ... intermediate tank, L1 to L10 ... line, V1 to V5 ... valve.

## Claims

1. A method for producing a hydrocarbon fuel, comprising:
a first step of holding a mixture containing an aliphatic compound produced by an alga, and a hydrocarbon solvent having a critical temperature of 90°C or higher in a supercritical state, with temperature and pressure adjusted so that a solubility of the aliphatic compound in 100 g of the hydrocarbon solvent is 15 g or less, and then recovering a soluble portion of the aliphatic compound in the hydrocarbon solvent; and
a second step of subjecting the soluble portion recovered in the first step to hydrotreatment using a catalyst.
